# DEMANDE DE BREVET EUROPEEN

(11) **EP 1 441 018 A1**
(43) Date de publication de la demande: **28.07.2004**
(21) Numéro de dépôt: 04290067.0
(22) Date de dépôt: 09.01.2004
(51) Int. Cl.: C09J 183/04, C09J 183/06, C09D 4/00, C09J 4/00

(54) **Composition servant de colle, son procédé d'obtention et ses applications**

(30) Priorité: 10.01.2003 FR 0300260
(71) Demandeur: Kloe S.A., 34830 Clapiers (FR)
(72) Inventeur: Coudray, Paul, 34270 Saint Jean De Cuculles (FR)
(74) Mandataire: Berger, Helmut

(57) **Abrégé**

L'invention porte sur une composition servant de colle comprenant au moins un alkyltrialkoxysilane ou l'un de ses dérivés et un dérivé d'acétylacétone.

De préférence, le dérivé d'acétylacétone est l'acétylacétonate d'aluminium.
L'invention porte également sur le procédé de fabrication de la composition.

Les applications possibles de la composition concernent la fixation de matériaux de même nature ou de nature différente, la fixation de pièces dont les surfaces à encoller sont relativement petites mais également la fixation hydrophobe de matrice de fibres (1) dans un support (3) ainsi que la connexion d'une fibre optique (8) à, notamment, un guide d'onde (10) ou à une puce optique intégrée.

## Description

L'invention concerne une composition servant de colle.

L'invention concerne également un procédé de préparation d'une telle composition ainsi que des applications multiples de cette composition.

A l'heure actuelle, on recherche non seulement des colles ayant des performances de fixation importante mais aussi des colles présentant des performances multiples.

Par exemple, les colles actuellement utilisées ne permettent pas d'assurer la fixation de deux matériaux dont les propriétés chimiques surfaciques sont différentes.

Aussi, les colles actuelles présentent des propriétés mécaniques et des tenues au vieillissement insuffisantes, ainsi qu'une forte reprise en humidité entraînant une durée de vie trop faible de la jonction.

Dans ce contexte, l'invention vise une composition servant de colle permettant de pallier les inconvénients précités et présentant en outre des performances pour une facilité d'utilisation ainsi que des possibilités d'applications dans divers domaines.

A cet effet, la composition servant de colle de l'invention est essentiellement caractérisée en ce qu'elle comprend au moins un alkyltrialkoxysilane ou l'un de ses dérivés et un dérivé d'acétylacétone.

De préférence, le dérivé d'acétylacétone est l'acétylacétonate d'aluminium.

En outre, la quantité du dérivé d'acétylacétone est avantageusement comprise entre 1 et 1,5 % en poids de la dite composition.

La composition de l'invention comprend de préférence commme alkyltrialkoxysilane ou l'un de ses dérivés du méthyltriméthoxysilane, du méthyltriéthoxysilane ou du glycidyloxypropyltriméthoxysilane.

Il est possible d'ajouter à la composition de l'invention un photoamorceur cationique.

Il est également possible d'ajouter à la composition de l'invention un alcoxyde de silice.

De préférence, l' alcoxyde de silice est du tetraméthoxysilane.

De plus, la composition d l'invention comprendre de la silice colloïdale.

Le procédé de fabrication de la composition de l'invention est essentiellement caractérisé en ce qu'il comprend au moins les étapes suivantes :
a) l'hydrolyse à pH acide d'une solution comprenant au moins un alkyltrialkoxysilane ou l'un de ses dérivés ;
b) la filtration de la solution obtenue ;
c) un tirage sous vide de la solution obtenue par l'étape b) de façon à obtenir une composition de fluidité contrôlée ; et
l'ajout d'un dérivé d'acétylacétone dans la solution avant ou après l'étape a).

De préférence, la durée de l'étape c) de tirage sous vide est comprise entre 15 et 60 minutes.

Avantageusement, l'étape a) d'hydrolyse se fait par une solution d'acide chlorhydrique.

Plus précisément, le procédé pour réaliser la composition de l'invention peut comprendre les étapes suivantes :
a0) le mélange du méthyltriméthoxysilane ou du méthyltriéthoxysilane avec de l'acétylacétonate d'aluminium ;
   a) l'hydrolyse à pH acide de la solution obtenue par l'étape a0);
   b) la filtration de la solution obtenue;
   c) un tirage sous vide de la solution obtenue par l'étape

En outre, le procédé pour réaliser la composition de l'invention peut également comprendre les étapes suivantes :
a) l'hydrolyse à pH acide d'une solution de glycidyloxypropyltriméthoxysilane ;
   a1) l'ajout d'acétylacétonate d'aluminium à la solution obtenue par l'étape a) ;
b) la filtration de la solution obtenue par l'étape a1);
c) un tirage sous vide de la solution obtenue par l'étape b).

Dans ce cas, le procédé peut comprendre également une étape d'ajout d'un photoamorceur cationique à la solution obtenue par l'étape a) ou a1).

Il peut comprendre aussi une étape d'ajout d'un alcoxyde de silice.

Enfin, il peut comprendre une étape d'ajout de silice colloïdale.

La composition de l'invention peut s'appliquer à la fixation de deux pièces de nature chimique surfacique différentes.

La composition de l'invention peut également s'appliquer à la fixation de deux pièces dont les surfaces respectives à joindre sont de relativement petites tailles.

La composition de l'invention peut aussi s'appliquer à l'encapsulation hydrophobe de toute pièce par la méthode d'application par pulvérisation.

Avantageusement, la composition de l'invention s'applique à la fixation hydrophobe d'une matrice de fibres optiques 1 disposées dans des rainures 2 au sein d'un boîtier 3 constitué de deux demi-boîtiers superposés 3a,3b, chaque demi-boîtiers présentant une face comportant des rainures 2 en V disposées en regard l'une de l'autre lors de la superposition des deux demi-boîtiers, la dite composition étant logée dans ces rainures et entre les faces respectives des deux demi-boîtiers.

La composition de l'invention peut en outre s'appliquer à la fixation d'une fibre optique 8 en regard d'un guide d'onde 10 réalisé dans un dispositif de couche photosensible déposé sur un substrat en silicium, la fibre optique 8 étant connectée au guide d'onde par l'intermédiaire d'un point de colle 9.

La composition de l'invention peut également s'appliquer à la fixation d'une fibre optique 5 dans laquelle a été inscrit ou sera ultérieurement inscrit un réseau de Bragg sur un support athermal en acier ou en Invar.

L'invention sera mieux comprise et d'autres buts, avantages et caractéristiques de celle-ci apparaîtront plus clairement à la lecture de la description qui suit et qui est notamment faite au regard des dessins annexés qui représentent des applications non limitatives de la composition servant de colle de l'invention et sur lesquels :
- La figure 1 représente une application de la composition servant de colle de l'invention pour la fixation hydrophobe d'une matrice de fibres optiques;
- La figure 2 représente une autre application de la composition servant de colle de l'invention pour l'emballage athermal de réseaux de Bragg photoinscrits dans des fibres ;
- La figure 3 représente une autre application possible de la composition servant de colle de l'invention pour la fixation d'une fibre, ou d'une matrice de fibres en regard d'un guide d'onde.

La composition servant de colle de l'invention permet, de par ses propriétés multiples, un grand nombre d'applications dans des domaines distincts.

Ces propriétés lui sont conférés par la nature même de cette composition mais également par son procédé d'obtention.

Ce procédé permet d'obtenir un produit que l'on nommera 'composition' et qui peut être conservé pendant un certain temps avant utilisation, comme on le verra plus loin.

Puis, pour obtenir les propriétés fixatrices de cette composition, on applique un traitement qui peut être thermique et/ou par insolation ou autres, comme on le verra également plus loin, le produit obtenu après ce traitement étant dénommé 'colle' dans la description qui suit.

La composition selon l'invention est réalisée à base d'un précurseur qui est un silane sélectionné dans le groupe des alkyltrialkoxysilanes ou de l'un de ses dérivés.

De préférence, l'alkyltrialkoxysilane utilisé est choisi dans le groupe constitué par le méthyltriméthoxysilane, le méthyltriéthoxysilane et le glycidyloxypropyltriméthoxysilane.

L'utilisation d'un tel précurseur hybride organique-inorganique permet la fixation de matériaux constitués de verre et de silice, tel que des matériaux vitreux, entre eux, ainsi que la fixation du silicium avec lui-même, mais également la fixation d'un matériau vitreux avec du silicium.

La composition servant de colle est de nature hybride puisqu'elle est constituée à la fois d'un réseau minéral et d'un réseau organique qui sont imbriqués l'un dans l'autre.

La composition de l'invention comprend, en plus du précurseur hybride, un dérivé d'acétylacétone.

De préférence, le dérivé d'acétylacétone est l'acétylacétonate d'aluminium.

Il a été démontré, dans le cadre de l'invention, que l'adjonction d'acétylacétonate d'aluminium au précurseur hybride augmente considérablement la durée de conservation de la composition obtenue.

En effet, en absence d'acétylacétonate d'aluminium, la durée de vie de la composition, pour une température de conservation de 0°C, est de quelques heures.

En revanche, pour une quantité d'acétylacétonate d'aluminium de 1% en poids de la composition, la durée de conservation de cette composition, pour une température de conservation de 0°C, est de 9 mois environ.

Puis, la durée de conservation continue à augmenter jusqu'à, au moins, une quantité d'acétylacétonate d'aluminium de 1,5% en poids de la composition pour des raisons qui seront expliquées dans la description du procédé d'obtention de la composition.

L'augmentation de la durée de conservation d'une telle composition s'explique notamment par la capacité de l'acétylacétonate d'aluminium à bloquer les réactions de polycondensation.

L'utilisation d'acétylacétonate d'aluminium dans la composition présente un double intérêt. En effet, comme décrit précédemment, la présence d'acétylacétonate permet d'abord d'augmenter considérablement la durée de conservation de la composition avant son utilisation.

De plus, l'acétylacétonate d'aluminium sert également de catalyseur à chaud (100 °C) des réactions de polycondensation.

Or, lors de l'application d'un traitement thermique à la composition de l'invention au cours duquel des réactions de polycondensation sont mises en jeu et confèrent à la composition ses propriétés collantes, la réactivité de la composition de l'invention est accrue et le collage est par conséquent plus solide grâce à la présence de liaisons covalentes.

Aussi, la présence des réseaux organiques et inorganiques conférés par le précurseur de silane permet de réticuler les deux réseaux dans un même temps ou séparément, la réticulation des deux réseaux pouvant être effectuée soit par la chaleur, soit par une insolation aux UV ou autres.

Il est ainsi possible de réaliser une colle à polymérisation thermique mais également une colle à double réticulation : thermique et/ou UV.

Pour cela et dans le cas de l'utilisation de glycidyloxypropyltriméthoxysilane par exemple, il est possible d'ajouter à la composition de l'invention un photoamorceur cationique.

Cet ajout permet de conférer à la composition cette double fonctionnalité, à savoir une réticulation thermique et une photoréticulation aux UV par exemple.

Ceci permet d'effectuer le collage en deux étapes, par exemple, pour effectuer le collage de deux pièces, l'insolation aux UV permet une première fixation des pièces dans leur position relative, puis les deux pièces peuvent être déplacées et subir le traitement thermique qui confère la rigidité de la fixation.

Pour rigidifier le réseau et tendre vers un système analogue à une couche anti-rayure, il est également possible d'ajouter à cette composition un alcoxyde de silice, tel qu'un tétraméthoxysilane ou de la silice colloïdale.

Le procédé d'obtention de la composition décrite ci-dessus comprend une étape d'hydrolyse d'une solution comprenant au moins le précurseur hybride, une étape de filtration et une étape de tirage sous vide.

L'ajout d'acetylacétonate d'aluminium s'effectue soit avant l'étape d'hydrolyse, soit après cette étape selon la nature du précurseur utilisé.

L'étape de tirage sous vide permet avantageusement d'augmenter l'extrait sec et par conséquent d'augmenter la viscosité de la composition.

Cette étape de tirage sous vide est rendue possible grâce à la présence d'acétylacétonate d'aluminium. En effet, sans acétylacétonate d'aluminium dans la composition, la précipitation de la solution empêche d'effectuer l'étape de tirage sous vide.

La quantité d'acétylacétonate d'aluminium est de préférence supérieure à 1% en poids de la composition afin d'éviter la précipitation de la solution et de rendre possible le tirage sous vide.

En revanche, au-delà d'une quantité d'acétylacétonate d'aluminium de 1,5% en poids de la composition, l'acétylacétonate d'aluminium se désolubilise, le tirage sous vide étant alors impossible.

Le tirage sous vide permet d'obtenir une colle plus ou moins fluide selon le temps pendant lequel le tirage sous vide est mis en oeuvre.

De préférence, la durée de l'étape de tirage sous vide varie entre 15 et 60 minutes selon la fluidité désirée.

En outre, il a été découvert dans le cadre de l'invention que l'étape de tirage sous vide confère à la composition servant de colle de l'invention des propriétés avantageuses.

En effet, l'augmentation de l'extrait sec permet d'éviter le retrait de la colle lors du traitement thermique, ce qui diminue notablement les risques de fissuration ou de décollement mais également les risques de fissuration des joints de colle dont la dimension est de plusieurs µm.

De plus, comme, la composition de l'invention présente également l'avantage de ne pas présenter d'expansion lors du traitement thermique, et ceci grâce au précurseur utilisé, l'invention permet d'obtenir une colle qui ne présente pas de phénomène d'expansion, ni de retrait, ce qui est très avantageux lors du collage de pièces nécessitant une position relativement précise.

En plus des propriétés énoncées ci-dessus, la composition servant de colle de l'invention obtenues par les deux procédés décrits précédemment est hydrophobe.

La meilleure tenue à l'humidité de l'air entraîne également une augmentation de la durée de vie de la colle après traitement thermique puisque cette hydrophobie empêche la diffusion de l'eau au niveau du joint ainsi que la destruction de la liaison.

Deux procédés de réalisation de la composition de l'invention sont décrit ci-dessous.

### Procédé 1 : Procédé de réalisation d'une colle à polymérisation thermique

Ce procédé implique les opérations suivantes :
- mélange de 1 mole de méthyltriméthoxysilane avec 1,5 % massique d'acétylacétonate d'aluminium,
- hydrolyse du mélange obtenu par 3 moles d'acide chlorhydrique à 0,01 N pendant 2 heures,
- filtrage de la solution à 0,2 µm,
- tirage sous vide pendant 15 à 60 minutes selon la fluidité désirée

Après le dépôt de la composition servant de colle sur la surface à coller, un traitement thermique est effectué. Le temps de ce traitement thermique est variable selon la rigidité désirée.

### Procédé 2 : Réalisation d'une colle à double réticulation : thermique et/ou UV

Ce procédé implique les opérations suivantes :
- hydrolyse de 1 mole de glycidyloxypropyltriméthoxysilane par 3 moles d'acide chlorhydrique à 0,1 N pndant 1 heure,
- ajout de x% d'un photoamorceur cationique,
- ajout de y% d'acétylacétonate d'aluminium,
- filtrage de la solution à 0,2 µm,
- tirage sous vide pendant 15 à 60 minutes selon la fluidité désirée

L'ajout du photoamorceur cationique permet la polymérisation des ponts époxydes du glycidyloxypropyltriméthoxysilane.

L'ajout de l'acétylacétonate d'aluminium permet quant à lui de catalyser thermiquement la condensation des groupes silanols entre eux et avec les ponts epoxydes.

Ainsi, il est possible, soit de favoriser un réseau de type résine époxy en augmentant la valeur de x, soit de favoriser un réseau de type SiO₂ et Si-O-C en augmentant la valeur de y.

De plus, pour rigidifier le réseau et tendre vers un système analogue à une couche antirayure, il est possible de rajouter soit un alcoxyde de silice tel que le tétra méthoxysilane, soit de la silice colloïdale.

Cette colle permet avantageusement la double polymérisation : thermique et UV comme explicité précédemment.

Grâce aux nombreuses propriétés avantageuses de la composition servant de colle de l'invention, de multiples applications de cette composition sont possibles.

On fait à présent référence, de façon non limitative, aux dessins annexés pour décrire des applications avantageuses de la composition de l'invention.

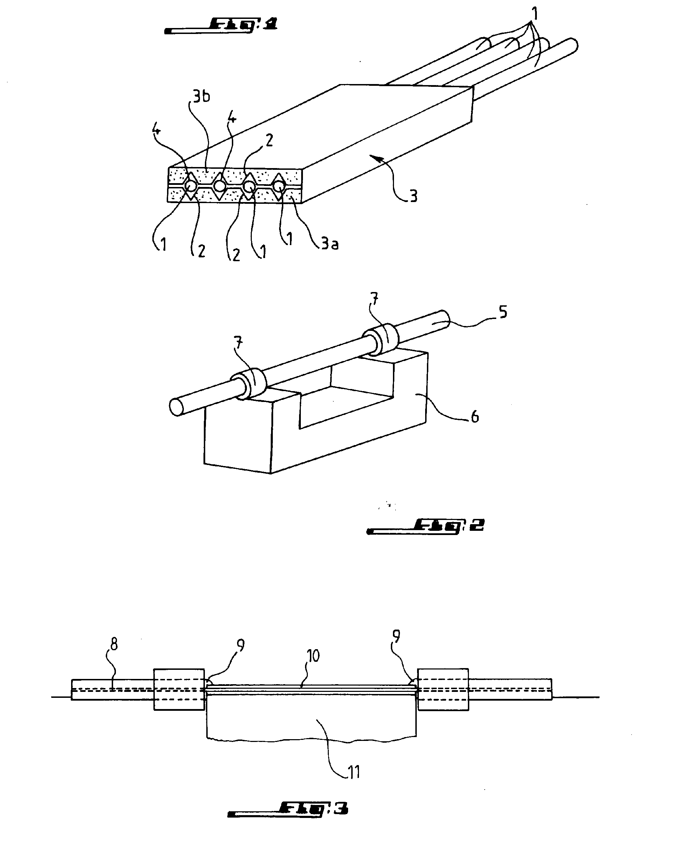

La figure 1 représente une matrice de fibres optiques 1 disposées dans des rainures 2 en V dans un support 3 en forme de boîtier comportant deux demi-boîtiers superposés 3a,3b, les faces en regard de ces deux demi-boîtiers 3a,3b comportant chacune les rainures 2 en V.

La colle recouvre les deux faces en regard ainsi que les rainures dans lesquelles sont disposées les fibres, ce qui permet à la fois de fixer solidement les deux demi-boîtiers 3a et 3b entre eux ainsi que les fibres 1 dans ces rainures 2.

L'application de, cette colle présente également l'avantage d'empêcher la dégradation des fibres par réaction avec l'humidité de l'air.

Cette matrice de fibres peut être utilisée pour des application liées à la connexion entre une puce optique et le réseau de fibres optiques mais également à la connexion de tout autre composant.

Le dépôt de la composition peut se faire avantageusement par la méthode d'application par pulvérisation.

La figure 2 représente une fibre 5 dans laquelle a été inscrit ou dans laquelle on souhaite inscrire un réseau de Bragg.

On cherche à fixer la fibre 5, généralement en silice, sur un support athermal 6, généralement en acier ou en Invar.

L'application d'un point de colle 7 au moins de la composition de l'invention entre la fibre 5 et le support 6 permet, grâce aux propriétés de complaisance de la composition de l'invention vis-à-vis des différentes matériaux d'obtenir une fixation solide entre deux matériaux qui présentent des natures chimiques de surface différentes.

De plus, la composition de l'invention présente des propriétés mécaniques et de complaisances permettant de compenser les mouvements relatifs entre les deux pièces à fixer.

Ainsi, l'application d'un ou de plusieurs points de colle 7 entre la fibre 5 et le support athermal 6 permet d'éviter le glissement de la fibre après mise sous tension, par exemple pour ajuster la période du réseau, sans provoquer ni une fissuration de la colle, ni sa rupture.

La résistance et la tenue au vieillissement de la composition de l'invention est ainsi accrue puisque la colle de l'invention présente une résistance aux efforts relatifs d'une pièce sur l'autre tout en les maintenant solidement fixées.

La figure 3 illustre la fixation d'une fibre optique 8 en regard d'un guide d'onde 10.

Avantageusement, la fibre optique 8 est fixée dans des rainures en V au sein d'une matrice comme cela a été décrit précédemment en référence à la figure 1.

Le guide d'onde 10 est réalisé dans un dispositif de couche photosensible déposé sur un substrat en silicium formant un composant optique intégré.

Comme illustrée en figure 3, la fibre optique 8 est connectée au guide d'onde 10 par l'intermédiaire d'un point de colle 9 de l'invention.

Cette position est rigoureusement maintenue ce qui évite toute perte de qualité en transmission de signaux entre le bout de la fibre et le guide d'onde. La composition de l'invention permet d'obtenir des indices optiques adaptées à la fibre et au guide d'onde.

De plus, le choix du précurseur permet une bonne adaptation de l'indice de réfraction de la colle pour être le plus proche possible du silicium.

Ce maintien solide et précis est possible notamment par l'absence de rétractation mais également l'absence d'expansion de la composition de l'invention lors du traitement thermique.

Ainsi, après application de la colle de l'invention 9 entre le guide d'onde 10 et la fibre 8 et après le traitement thermique, le guide d'onde 10 et la fibre 8 sont maintenus dans la position dans laquelle l'enduction par la composition de l'invention 9 a été effectuée.

Ceci permet d'obtenir une fixation à la fois solide et précise de deux surfaces à encoller de petite tailles.

La composition utilisée dans les exemples illustrés par les figures 1 à 3 peut être soit une colle thermoréticulable, soit une colle à double réticulation.

D'autres applications de la composition de l'invention sont possibles.

La composition servant de colle de l'invention peut également être utilisée pour fixer directement des puces optiques ou optoélectroniques entre elles.

Aussi, toute encapsulation hydrophobe d'une pièce quelconque peut être réalisé par l'application de la composition de l'invention, de préférence par la méthode d'application par pulvérisation.

La composition de l'invention peut aussi être utilisée pour la fixation de pièces de nature chimique identiques, proches ou différentes mais également pour toute fixation minutieuse de pièces de petites surfaces à encoller.

## Revendications

1. Composition servant de colle, **caractérisée en ce qu'**elle comprend au moins un alkyltrialkoxysilane ou l'un de ses dérivés et un dérivé d'acétylacétone.

2. Composition selon l'une quelconque des revendications précédentes, **caractérisée en ce qu'**elle comprend de l'acétylacétonate d'aluminium.

3. Composition selon l'une quelconque des revendications précédentes, **caractérisée en ce que** la quantité du dérivé d'acétylacétone est comprise entre 1 et 1,5 % en poids de la dite composition.

4. Composition selon l'une quelconque des revendications précédentes, **caractérisé en ce qu'**elle comprend du méthyltriméthoxysilane ou du méthyltriéthoxysilane.

5. Composition selon l'une quelconque des revendications 1 à 3, **caractérisé en ce qu'**elle comprend du glycidyloxypropyltriméthoxysilane.

6. Composition selon la revendication 5, **caractérisée en ce qu'**elle comprend en outre un photoamorceur cationique.

7. Composition selon l'une quelconque des revendications 5 et 6, **caractérisée en ce qu'**elle comprend en outre un alcoxyde de silice.

8. Composition selon la revendication 7, **caractérisée en ce qu'**elle comprend du tetraméthoxysilane.

9. Composition selon l'une quelconque des revendications 5 et 6, **caractérisée en ce qu'**elle comprend en outre de la silice colloïdale.

10. Composition selon l'une quelconque des revendications précédentes **caractérisée** en qu'elle est chauffée avant application sur la surface à encoller.

11. Procédé de fabrication de la composition servant de colle selon l'une quelconque des revendications 1 à 10, **caractérisé en ce qu'**il comprend au moins les étapes suivantes :
a) l'hydrolyse à pH acide d'une solution comprenant au moins un alkyltrialkoxysilane ou l'un de ses dérivés ;
b) la filtration de la solution obtenue ;
c) un tirage sous vide de la solution obtenue par l'étape b) de façon à obtenir une composition de fluidité contrôlée ; et
l'ajout d'un dérivé d'acétylacétone dans la solution avant ou après l'étape a).

12. Procédé selon la revendication 11, **caractérisé en ce que** la durée de l'étape c) de tirage sous vide est comprise entre 15 et 60 minutes.

13. Procédé selon l'une quelconque des revendications 11 à 12, **caractérisé en ce que** l'étape a) d'hydrolyse se fait par une solution d'acide chlorhydrique.

14. Procédé selon l'une quelconque des revendications 11 à 13 pour réaliser une composition selon l'une quelconque des revendications 1 à 4, **caractérisé en ce qu'**il comprend les étapes suivantes :
a0) le mélange du méthyltriméthoxysilane ou du méthyltriéthoxysilane avec de l'acétylacétonate d'aluminium ;
a) l'hydrolyse à pH acide de la solution obtenue par l'étape a0);
b) la filtration de la solution obtenue;
c) un tirage sous vide de la solution obtenue par l'étape b).

15. Procédé selon l'une quelconque de des revendications 11 à 13 pour réaliser une composition selon l'une quelconque des revendications 5 à 9, **caractérisé en ce qu'**il comprend les étapes suivantes :
a) l'hydrolyse à pH acide d'une solution de glycidyloxypropyltriméthoxysilane ;
a1) l'ajout d'acétylacétonate d'aluminium à la solution obtenue par l'étape a) ;
b) la filtration de la solution obtenue par l'étape a1);
c) un tirage sous vide de la solution obtenue par l'étape b).

16. Procédé selon la revendication 15, **caractérisé en ce qu'**il comprend en outre une étape d'ajout d'un photoamorceur cationique à la solution obtenue par l'étape a) ou a1).

17. Procédé selon l'une quelconque des revendications 15 et 16, **caractérisé en ce qu'**il comprend en outre une étape d'ajout d'un alcoxyde de silice.

18. Procédé selon l'une quelconque des revendications 15 et 16, **caractérisé en ce qu'**il comprend en outre une étape d'ajout de silice colloïdale.

19. Application de la composition selon l'une quelconque des revendications 1 à 10 à la fixation de deux pièces de nature chimique surfacique différentes.

20. Application de la composition selon l'une quelconque des revendications 1 à 10 à la fixation de deux pièces dont les surfaces respectives à joindre sont de relativement petites tailles.

21. Application de la composition selon l'une quelconque des revendications 1 à 10 pour l'encapsulation hydrophobe de toute pièce par la méthode d'application par pulvérisation.

22. Application de la composition selon l'une quelconque des revendications 1 à 10 à la fixation hydrophobe d'une matrice de fibres optiques 1 disposées dans des rainures 2 au sein d'un boîtier 3 constitué de deux demi-boîtiers superposés 3a,3b, chaque demi-boîtiers présentant une face comportant des rainures 2 en V disposées en regard l'une de l'autre lors de la superposition des deux demi-boîtiers, la dite composition étant logée dans ces rainures et entre les faces respectives des deux demi-boîtiers.

23. Application de la composition selon l'une quelconque des revendications 1 à 10 à la fixation d'une fibre optique 8 en regard d'un guide d'onde 10 réalisé dans un dispositif de couche photosensible déposé sur un substrat en silicium, la fibre optique 8 étant connectée au guide d'onde par l'intermédiaire d'un point de colle 9.

24. Application de la composition selon l'une quelconque des revendications 1 à 10 à la fixation d'une fibre optique 5 dans laquelle a été inscrit ou sera ultérieurement inscrit un réseau de Bragg sur un support athermal en acier ou en Invar.
